# EUROPEAN PATENT APPLICATION

(11) **EP 4 607 447 A1**
(43) Date of publication of application: **27.08.2025**
(21) Application number: 23879657.7
(22) Date of filing: 06.10.2023
(51) Int. Cl.: G06Q 50/16

(54) **SYSTEM, PROGRAM, AND METHOD**

(30) Priority: 18.10.2022 JP 2022167215
(71) Applicant: Penetrator Inc., Tokyo 113-0023 (JP)
(72) Inventor: AKUTSU, Takeo, Tokyo 113-0023 (JP)
(74) Representative: Hoffmann Eitle
(86) International application number: PCT/JP2023/036653
(87) International publication number: WO 2024/085013

(57) **Abstract**

An object of the present invention is to provide a system capable of identifying a piece of real estate having a predetermined attribute.

Provided is a system including at least one computer apparatus, the system comprising: a region identifier that identifies, from a captured image of ground captured from the sky, a region corresponding to a piece of real estate having a predetermined attribute; and an address identifier that identifies an address of the piece of real estate corresponding to the identified region.

## Description

### Technical Field

The present invention relates to a system, a program, and a method.

### Background Art

Disclosed is that whether or not a house on an aerial photograph or a satellite image is a vacant house is determined based on machine learning data for estimating a vacant house on an image generated based on pixel information of a site of the vacant house (see, for example, Patent Literature 1).

### Citation List

### Patent Literature

Patent Literature 1: WO 2019/225597 A

### Summary of Invention

### Technical Problem

The present invention can solve, for example, any of the following problems.

A first problem of the present invention is to provide a system capable of identifying a piece of real estate having a predetermined attribute. A second problem of the present invention is to provide a system capable of identifying an owner of a piece of real estate corresponding to a plurality of points or a plurality of regions on a captured image or a map image corresponding to the captured image. A third problem of the present invention is to provide a system capable of identifying an owner of a piece of real estate having a predetermined attribute, an owner of a store or a facility, or an owner of a land on which the store or the facility is located.

### Solution to Problem

According to the invention, the above problem is solved by any of the following:
[1] A system including at least one computer apparatus, the system comprising: a region identifier that identifies, from a captured image of ground captured from the sky, a region corresponding to a piece of real estate having a predetermined attribute; and an address identifier that identifies an address of the piece of real estate corresponding to the identified region;
[2] The system according to [1], wherein the address identifier identifies a latitude and longitude corresponding to at least one position of the identified region, and identifies an address of the piece of real estate corresponding to the identified latitude and longitude;
[3] The system according to [1] or [2], comprising: an owner identifier that identifies an owner of the piece of real estate corresponding to the address identified by the address identifier based on a correspondence relationship between the address and the owner of the piece of real estate corresponding to the address;
[4] The system according to [3], wherein the owner identifier identifies the owner of the piece of real estate corresponding to the address identified by the address identifier and contact information of the owner based on a correspondence relationship between the address, and the owner of the piece of real estate corresponding to the address and the contact information of the owner;
[5] The system according to [3], wherein the address identified by the address identifier is a lot number, and the owner identifier identifies the owner of the piece of real estate corresponding to the identified lot number based on a correspondence relationship between the lot number and the owner of the piece of real estate corresponding to the lot number;
[6] The system according to any one of [3] to [5], comprising: a first information transmitter that transmits predetermined information to the owner identified by the owner identifier; a second information transmitter that transmits, to another computer apparatus, transmission information for transmitting the predetermined information or sending information for sending an item or item to be sent to the identified owner; a printer that controls the sending information to be printed on a medium; and/or a storage that stores the sending information in a storage medium;
[7] The system according to any one of [1] to [6], wherein the region identifier identifies the region corresponding to the piece of real estate having the predetermined attribute using a prediction model machine-learned using, as input data, image data of at least a partial region of the captured image of the ground captured from the sky and using, as output data, information related to the attribute of the piece of real estate corresponding to the region;
[8] The system according to any one of [1] to [7], wherein the predetermined attribute refers to a vacant house, an idle land, a parking lot, an agricultural land, or a predetermined building;
[9] A program causing a computer apparatus to function as: a region identifier that identifies, from a captured image of ground captured from the sky, a region corresponding to a piece of real estate having a predetermined attribute; and an address identifier that identifies an address of the piece of real estate corresponding to the identified region;
[10] A method executed in a system including at least one computer apparatus, the method comprising: a region identification step of identifying, from a captured image of ground captured from the sky, a region corresponding to a piece of real estate having a predetermined attribute; and an address identification step of identifying an address of the piece of real estate corresponding to the identified region;
[11] A system including at least one computer apparatus, the system comprising: an address identifier that respectively identifies addresses of pieces of real estate corresponding to a plurality of points or a plurality of regions based on positions of the plurality of points or the plurality of regions on a captured image or a map image corresponding to the captured image; and an owner identifier that respectively identifies owners of the pieces of real estate corresponding to the plurality of addresses identified by the address identifier based on a correspondence relationship between the addresses and the owners of the pieces of real estate corresponding to the addresses;
[12] The system according to [11], comprising: a list displayer that displays, on one display screen, a list of the plurality of addresses identified by the address identifier, and/or displays, on one display screen, a list of the owners of the pieces of real estate corresponding to the plurality of addresses identified by the owner identifier;
[13] A program causing a computer apparatus to function as: an address identifier that respectively identifies addresses of pieces of real estate corresponding to a plurality of points or a plurality of regions based on positions of the plurality of points or the plurality of regions on a captured image or a map image corresponding to the captured image; and an owner identifier that identifies owners of the pieces of real estate corresponding to the plurality of addresses identified by the address identifier based on a correspondence relationship between the addresses and the owners of the pieces of real estate corresponding to the addresses;
[14] A method executed in a system including at least one computer apparatus, the method comprising: an address identification step of respectively identifying addresses of pieces of real estate corresponding to a plurality of points or a plurality of regions based on positions of the plurality of points or the plurality of regions on a captured image or a map image corresponding to the captured image; and an owner identification step of identifying owners of the pieces of real estate corresponding to the plurality of addresses identified by the address identification step based on a correspondence relationship between the addresses and the owners of the pieces of real estate corresponding to the addresses;
[15] A system including at least one computer apparatus, the system comprising: an address identifier that identifies an address corresponding to a piece of real estate, a store, or a facility satisfying a predetermined condition based on a correspondence relationship between the address and attribute information of the piece of real estate, the store, or the facility corresponding to the address; and an owner identifier that identifies an owner of the piece of real estate, the store, or the facility corresponding to the identified address;
[16] The system according to [15], comprising: a string input receptor that receives an input of a string, wherein the address identifier identifies an address corresponding to a name of a piece of real estate, a store, or a facility including the received string;
[17] The system according to [15] or [16], comprising: a first information transmitter that transmits predetermined information to the owner identified by the owner identifier; a second information transmitter that transmits, to another computer apparatus, transmission information for transmitting the predetermined information or sending information for sending an item or item to be sent to the identified owner; a printer that controls the sending information to be printed on a medium; and/or a storage that stores the sending information in a storage medium;
[18] A program causing a computer apparatus to function as: an address identifier that identifies an address corresponding to a piece of real estate, a store, or a facility satisfying a predetermined condition based on a correspondence relationship between the address and attribute information of the piece of real estate, the store, or the facility corresponding to the address; and an owner identifier that identifies an owner of the piece of real estate, the store, or the facility corresponding to the identified address;
[19] A method executed in a system including at least one computer apparatus, the method comprising: an address identification step of identifying an address corresponding to a piece of real estate, a store, or a facility satisfying a predetermined condition based on a correspondence relationship between the address and attribute information of the piece of real estate, the store, or the facility corresponding to the address; and an owner identification step of identifying an owner of the piece of real estate, the store, or the facility corresponding to the identified address.

### Advantageous Effects of Invention

According to the present invention, it is possible to provide a system identifying a piece of real estate having a predetermined attribute. According to the present invention, it is also possible to provide a system identifying an owner of a piece of real estate corresponding to a plurality of points or a plurality of regions on a captured image or a map image corresponding to the captured image. According to the present invention, it is possible to provide a system identifying an owner of a piece of real estate having a predetermined attribute, an owner of a store or a facility, or an owner of a land on which the store or the facility is located.

### Brief Description of Drawings

Fig. 1 is a block diagram that illustrates a hardware configuration of an information processing apparatus according to an embodiment of the present invention.
Fig. 2 is a flowchart of a real estate and owner identification process according to an embodiment of the present invention.
Fig. 3 is a diagram for describing a process of identifying an address according to an embodiment of the present invention.
Fig. 4 is a diagram illustrating a flowchart of the second real estate and owner identification process according to an embodiment of the present invention.

### Description of Embodiments

Hereinafter, embodiments of the present invention will be described, but the present invention is not limited to the following embodiments unless it is contrary to the spirit / scope of the present invention. The order of processes constituting a flowchart described later may be changed within a range in which inconsistency or mismatching does not occur in the processing contents, and it is also possible to omit some of the processes constituting the flowchart or add a new process to the processes constituting the flowchart within a range in which inconsistency or mismatching does not occur in the processing contents. In addition, an apparatus that mainly executes the processes constituting the flowchart can be changed to another apparatus unless it is contrary to the gist of the present invention. At this time, it is possible to change the processing contents so as not to cause inconsistency or mismatching in the processing contents.

The system according to an embodiment of the present invention may include, for example, one computer apparatus (standalone type), one or a plurality of server apparatuses and one or a plurality of terminal apparatuses (client server type), or a host apparatus and one or a plurality of guest apparatuses (peer-to-peer type). In addition, the server apparatuses may function in a distributed manner in a plurality of computer apparatuses. For example, instead of the server apparatus, a distributed ledger technology such as a block chain may be utilized. Hereinafter, for example, a case where the system according to an embodiment of the present invention includes one computer apparatus (hereinafter, referred to as an information processing apparatus) will be described.

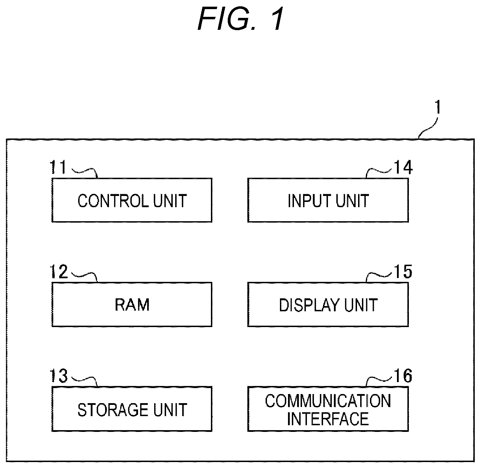

Fig. 1 is a block diagram that illustrates a hardware configuration of an information processing apparatus according to an embodiment of the present invention. The information processing apparatus 1 includes a control unit 11, an RAM 12, a storage unit 13, an input unit 14, a display unit 15, and a communication interface 16, all of which are connected with buses.

The control unit 11 includes a CPU and an ROM. The control unit 11 executes a program stored in the storage unit 13 and controls the information processing apparatus 1. The RAM 12 is a work area of the control unit 11. The storage unit 13 is a storage medium for storing programs and data. The control unit 11 performs an arithmetic process based on programs and data read from the RAM 12 as well as data input by the input unit 14.

The display unit 15 has a display screen. The control unit 11 outputs a video signal for displaying an image on the display screen according to a result of the arithmetic process. Here, the display screen of the display unit 15 may be a touch panel including a touch sensor. In this case, the touch panel functions as the input unit 14.

The communication interface 16 can be connected to a communication network 4 wirelessly or by wire, and can transmit and receive data to and from other computer apparatuses via the communication network 4. Data received via the communication interface 16 is loaded into the RAM 12, and the arithmetic process is performed by the control unit 11.

Note that the program may be stored in a recording medium such as a CD-ROM. In this case, the program stored in the recording medium may be installed in the information processing apparatus 1 to execute a predetermined function. Alternatively, the program may be distributed from a computer apparatus outside the system. In this case, the program distributed from the computer apparatus outside the system may be installed in the information processing apparatus 1 to execute a predetermined function.

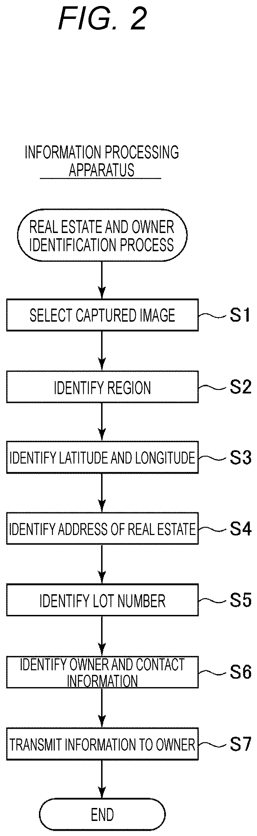

Next, a real estate and owner identification process in the system according to an embodiment of the present invention will be described. Fig. 2 is a flowchart of a real estate and owner identification process according to an embodiment of the present invention. Note that the real estate is a concept including both lands and buildings. The user manipulates the input unit 14 of the information processing apparatus 1 to start dedicated application software for executing the real estate and owner identification process (hereinafter, the real estate and owner identification process is referred to as an "identification process"). The user manipulates the input unit 14 of the information processing apparatus 1 to identify, from a captured image of ground captured from the sky, a region corresponding to the piece of real estate having a predetermined attribute, and starts the identification process for identifying an owner of the piece of real estate corresponding to the identified region.

First, the user manipulates the input unit 14 of the information processing apparatus 1 to select a captured image or an area to be subjected to the identification process (step S1). In a case where the area is selected, the captured image corresponding to the area is selected. The captured image may be stored in advance in the storage unit 13 of the information processing apparatus 1, or may be read by the information processing apparatus 1 from an external storage apparatus that stores the captured image. The captured image is not particularly limited only if being an image of the ground captured from the sky, and the examples thereof can include an aerial photograph and a satellite image. The aerial photograph is a photograph of the ground captured by a camera mounted on an aircraft. The satellite image is image data acquired by a sensor mounted on an artificial satellite. The captured image may be one image in combination with a plurality of images.

Next, the control unit 11 of the information processing apparatus 1 identifies, from the captured image, the region corresponding to the piece of real estate having the predetermined attribute (step S2). The attribute is for identifying what state the piece of real estate is in, what application the piece of real estate is used for, what kind of buildings or equipment is there, and the like.

The predetermined attribute is not particularly limited, and the examples thereof can include a vacant house, an idle land, a parking lot, an agricultural land, and a material storage lot. The vacant house means a building where no person lives, and the idle land means a land that is not being utilized. The parking lot is a land being utilized as a place for parking a vehicle. The agricultural land is a land being utilized for agriculture, and the examples thereof can include a rice field and a plowed field. The material storage lot is a land being utilized as a storage lot for materials such as building materials.

In addition, examples of the predetermined attribute can include the presence of a predetermined building. The predetermined building is not particularly limited, and the examples thereof can include a mansion, an apartment, a solitary house, and an office building. In addition, examples of the predetermined building can include a building having a predetermined age or more, and a building having a predetermined age or less.

In step S2, the region corresponding to the piece of real estate having the predetermined attribute is identified from the captured image. However, the user can also manipulate the input unit 14 of the information processing apparatus 1 to select the predetermined attribute from options such as the vacant house, the idle land, the parking lot, and the agricultural land. The user selects one attribute of these options depending on the owner of the piece of real estate having the attribute to be identified and the contact information thereof.

A method of identifying the region corresponding to the piece of real estate having the predetermined attribute on the captured image by the information processing apparatus 1 is not particularly limited. The information processing apparatus 1 can identify the region corresponding to the piece of real estate having the predetermined attribute by identifying the attribute of the piece of real estate corresponding to each region of the captured image based on information (information related to RGB) related to pixels constituting the captured image.

For example, the information processing apparatus 1 uses a prediction model machine-learned using, as input data, image data (information such as RGB of each of pixels constituting an image) in which the attribute of the piece of real estate (for example, the vacant house, the idle land, the parking lot, the agricultural land, or the material storage lot) is clear among captured images serving as criteria (samples), and using, as output data, information related to the attribute of the piece of real estate corresponding to the image data, to identify the region corresponding to the piece of real estate having the predetermined attribute from the captured image selected in step S1. Here, the image data having the same attribute as the predetermined attribute identified in step S2 is used as the input data. In this way, the information processing apparatus 1 can identify, from the captured image, the region corresponding to the piece of real estate having the predetermined attribute.

In a case where the information processing apparatus 1 identifies a land on which a vacant house has been built as the piece of real estate having the predetermined attribute, that is, in a case where the information processing apparatus 1 identifies a region on a captured image corresponding to the land that is the vacant house, the information processing apparatus 1 uses a prediction model using, as input data, a plurality of pieces of image data related to the vacant house captured from the sky. Note that, in an area where snow accumulates, the information processing apparatus 1 can also use a state of snow accumulating in a house or a site on the captured image as a material for determining whether or not the house is a vacant house.

In addition, in the case where the information processing apparatus 1 identifies the land on which the vacant house has been built as the piece of real estate having the predetermined attribute, the following method can also be adopted. The information processing apparatus 1 uses a prediction model machine-learned using, as input data, image data (information such as RGB of each pixel constituting an image) in which the attribute of the piece of real estate clearly indicates that the building is a solitary house or the like, and using, as output data, information related to the attribute of the piece of real estate corresponding to the image data, that is, information indicating that the building is a solitary house or the like, to identify a region corresponding to the building from the captured image selected in step S1. Then, the information processing apparatus 1 can identify a region corresponding to a building with a high possibility of being a vacant house by identifying a building infrequently utilized or in a vacant state using a thermal infrared image of the ground captured from the sky and of the same area captured as on the captured image. More specifically, the information processing apparatus 1 determines, based on the latitude and longitude of the region corresponding to the building identified from the captured image and pixel information of the thermal infrared image at the latitude and longitude, whether or not the building is in a vacant state. For example, from the thermal infrared image at the latitude and longitude, the information processing apparatus 1 can determine that the building is in the vacant state if the temperature thereof is lower than that of surrounding buildings by at least a threshold value.

In addition, in a case where the information processing apparatus 1 identifies a region on a captured image corresponding to a land that is the idle land, the parking lot, or the agricultural land, the information processing apparatus 1 uses a prediction model using, as input data, a plurality of pieces of image data related to each of the idle land, the parking lot, or the agricultural land captured from the sky.

The machine learning algorithm is not particularly limited, and a known algorithm can be used. However, deep learning using a multilayer neural network is preferably used. The multilayer neural network has an input layer, an output layer, and a plurality of intermediate layers. A weight is set for an edge connecting nodes to nodes of each of the layers. Weights corresponding to respective inputs to the nodes are set for the edge, the weights corresponding to the respective inputs to the nodes are subjected to multiplication, and a value obtained by the multiplication of the weights and a bias are added. The value obtained by the addition is subjected to nonlinear conversion using an activation function to calculate an activity value. The calculated activity value is a value of the input passed to nodes of the next layer. The number of the intermediate layers can be appropriately designed.

In addition, the control unit 11 can execute a process of extracting a contour by a known method based on the captured image selected in step S1, and divide the captured image into a plurality of regions partitioned by the contour. Then, the control unit 11 can determine whether or not each of the plurality of regions is the region corresponding to the piece of real estate having the predetermined attribute using the prediction model.

Note that, in step S2, the control unit 11 may not only identify the region corresponding to the piece of real estate having the predetermined attribute, but also calculate an area of the piece of real estate corresponding to the identified region, a length of each of sides constituting an outer shape of the piece of real estate, a length of a connecting road, and the like. The area and the like of the piece of real estate can be calculated based on a scale of the captured image. The area and the like of the piece of real estate may be calculated using, for example, the captured image and survey data provided by the Ministry of Land, Infrastructure, Transport and Tourism. AI analysis may be used to calculate the area and the like of the piece of real estate.

Next, the control unit 11 identifies the latitude and longitude corresponding to at least one position of the identified region based on a position of the region identified as having the predetermined attribute on the captured image (step S3). Next, the control unit 11 identifies an address of the piece of real estate corresponding to the identified region based on the position of the region identified as having the predetermined attribute on the captured image (step S4). In step S4, the control unit 11 may identify the address of the piece of real estate corresponding to the latitude and longitude identified in step S3. Here, the "address" is a concept including both indication of residential addresses and a lot number. The indication of residential addresses refers to addresses defined by a municipality based on the "Act on Indication of Residential Addresses (Act No. 119, 1962)", and the lot number refers to a number assigned to each piece of real estate by the Legal Affairs Bureau.

Processes of steps S3 and S4 will be described. In the storage unit 13 of the information processing apparatus 1, map data of the same area as the area where the captured image has been captured is registered in advance. In addition, as the captured image selected in step S1, used is image data with which the latitude and longitude of each point or each region on the captured image can be identified. As the image data, used is data in which points and latitudes and longitudes in each piece of image data are stored in association with each other. In the map data, an address (lot number or indication of a residential address) of each region or each point is stored in association with the latitude and longitude of each region or each point on the map.

Therefore, if the region corresponding to the piece of real estate having the predetermined attribute on the captured image is identified in step S2, the information processing apparatus 1 can identify the latitude and longitude corresponding to at least one position of the region based on positions of the region on the captured image. At least one position of the region may be a predetermined point included in the region on the captured image. The information processing apparatus 1 can identify the latitude and longitude of the predetermined point included in the identified region. The predetermined point may be a center point in the identified region. The information processing apparatus 1 can refer to the map data in which the address of each region or each point is stored in association with the latitude and longitude of each region or each point on the map, and identify the address (lot number or the indication of the residential address) corresponding to the latitude and longitude corresponding to at least one position of the identified region.

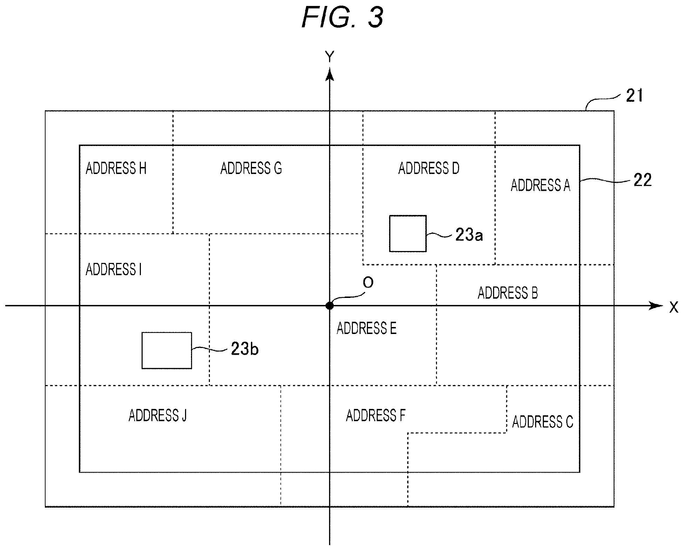

In step S4, in addition to a method of identifying the address of the piece of real estate corresponding to the identified region using the latitude and longitude, the information processing apparatus 1 can also identify the address of the piece of real estate corresponding to the identified region using an orthogonal coordinate system on a plane. In this case, step S3 may be omitted. Fig. 3 is a diagram for describing a process of identifying an address according to an embodiment of the present invention. In the storage unit 13 of the information processing apparatus 1, map data 21 of the same area as an area where a captured image 22 has been captured is registered in advance.

In the map data 21, an address of each piece of real estate in the area is registered in association with XY coordinates of an orthogonal coordinate system (XY coordinate system) on a plane. A specific point in the area is set as an origin O. A north side can be set to a first quadrant and a second quadrant, and a south side can be set to a third quadrant and a fourth quadrant in a north-south direction as a Y axis. An east side can be set to the first quadrant and the fourth quadrant, and a west side can be set to the second quadrant and the third quadrant in an east-west direction as an X axis. The coordinates (X, Y) of the origin O can be represented by (0, 0), and in Fig. 3, an address of the origin O is registered as an address E.

In step S2, some regions of the captured image 22 are identified as a region 23a and a region 23b corresponding to a piece of real estate having a predetermined attribute. It is possible to identify an address of each region of the captured image 22 by setting a scale of the map data 21 to the same scale as a scale of the captured image 22, superimposing a point corresponding to a specific point of the map data 21 on the captured image 22 with the origin O of the map data 21 as the same point, and making the direction of the captured image 22 and the direction of the map data 21 the same. In other words, the address is registered in the map data 21 in association with the XY coordinates, and the address of the region can be identified based on the XY coordinates of the region on the captured image 22 according to this correspondence relationship. Here, the address of the region 23a is an address D, and the address of the region 23b is an address I.

In a case where the address identified in step S4 conforms to the indication of residential addresses, the control unit 11 identifies the lot number corresponding to the indication of the residential address identified in step S3 based on a correspondence relationship between the indication of the residential address and the lot number (step S5). In the storage unit 13 of the information processing apparatus 1, an address master table in which the lot number is stored in association with the indication of the residential address is registered, and the lot number corresponding to the indication of the residential address identified in step S4 can be identified by referring to the address master table.

Note that, in a case where the identification process is executed based on the captured image of the area having the same lot number and the indication of the residential address, the process of step S5 can be omitted. The lot number identified in step S4 or S5 is used to identify the owner of the piece of real estate having the predetermined attribute in step S6 to be described later. In a case where the address identified in step S4 is the lot number, step S5 is omitted, and the process proceeds from step S4 to step S6.

Next, the control unit 11 identifies the owner of the piece of real estate corresponding to the identified address based on a correspondence relationship between the address and the owner of the piece of real estate corresponding to the address (step S6). In step S6, the owner of the piece of real estate corresponding to the identified address and the contact information of the owner may be identified based on a correspondence relationship between the address, and the owner of the piece of real estate corresponding to the address and the contact information of the owner. In step S4 or S5, in a case where the control unit 11 identifies the lot number, the control unit 11 identifies the owner of the piece of real estate corresponding to the identified lot number and the contact information thereof based on a correspondence relationship between the lot number and the owner of the piece of real estate corresponding to the lot number.

A method of identifying the owner of the piece of real estate corresponding to the address and the contact information of the owner is not particularly limited. However, it is preferable that the control unit 11 identify the owner of the piece of real estate and the contact information thereof using data stored in association with the address and the owner of the piece of real estate corresponding to the address. For example, in the storage unit 13 of the information processing apparatus 1, the owner master table in which the owner of the piece of real estate corresponding to the address (lot number) and the contact information of the owner are stored is registered in association with the address (lot number). The control unit 11 can identify the owner corresponding to the address identified in step S4 or the lot number identified in step S4 or S5 and the contact information thereof by referring to the owner master table.

In addition, the information processing apparatus 1 may identify the owner corresponding to the lot number identified in step S4 or S5 and the contact information thereof in cooperation with a system including another computer apparatus. In this case, the information processing apparatus 1 can identify the owner corresponding to the address identified in step S4 or the lot number identified in step S4 or S5 and the contact information thereof, for example, in cooperation with a registration/deposit online application system provided by the Ministry of Justice. The information processing apparatus 1 can receive, from the registration/deposit online application system, register data in which the owner corresponding to the lot number and the contact information thereof are recorded.

The "owner" identified in step S6 refers to the name of the owner. In addition, the contact information of the owner identified in step S6 is not particularly limited, and the examples thereof can include a fixed telephone number, a telephone number of a mobile phone, an e-mail address, a facsimile number, an address (indication of a residential address), a zip code, and the like. By outputting such as displaying the name and the contact information of the identified owner on the display unit 15 of the information processing apparatus 1, the user can contact the owner of the piece of real estate having the predetermined attribute by telephone, e-mail, facsimile, mail, or the like. Which of these communication methods is adopted can be appropriately changed depending on the purpose.

Next, the information processing apparatus 1 transmits predetermined information to the identified owner, that is, the owner of the piece of real estate having the predetermined attribute using the contact information of the owner identified in step S6 (step S7). The predetermined information to be transmitted in step S7 is not particularly limited. The predetermined information can be transmitted via the input unit 14 of the information processing apparatus 1 by the user and stored in the storage unit 13. The predetermined information stored in the storage unit 13 is read out during execution of step S7.

The predetermined information to be transmitted to the owner of the piece of real estate in step S7 can be appropriately changed depending on a type of the predetermined attribute or the purpose of the user. For example, in a case where the predetermined attribute refers to the idle land or the vacant house, the information processing apparatus 1 can transmit a message or a proposal sentence for real estate sale or land rental to the owner of the piece of real estate. In addition, the predetermined information may include information related to the name of the owner as an addressee and an address (lot number and indication of a residential address) of a piece of real estate for identifying which piece of real estate the proposal is related to.

A method of transmitting the predetermined information in step S7 is also not particularly limited. For example, the predetermined information is transmitted from the information processing apparatus 1 to the identified owner by e-mail or facsimile. The method of transmitting the predetermined information may be selected by the user manipulating the input unit 14 of the information processing apparatus 1.

In addition, instead of the process of transmitting the predetermined information to the owner of the piece of real estate in step S7 or in addition to the process of transmitting the predetermined information to the owner of the piece of real estate, it may be possible to execute a process of transmitting transmission information for transmitting the predetermined information or sending information for sending an item or item to be sent to the owner identified in step S6 to another computer apparatus, a process of controlling the sending information to be printed on a medium, and/or a process of storing the sending information in a storage medium. Which of these processes is executed by the information processing apparatus 1 after executing step S6 can be appropriately designed. By manipulating the input unit 14 of the information processing apparatus 1, the user can also select which of these processes to be executed.

The information processing apparatus 1 executes the process of transmitting the transmission information for transmitting the predetermined information to the owner identified in step S6 to another computer apparatus, whereby the other computer apparatus can transmit the predetermined information from another computer apparatus to the owner by e-mail or facsimile. The transmission information includes the name of the owner, the contact information such as an e-mail address or a facsimile number, and the address (lot number and the indication of the residential address) of the identified piece of real estate. Here, the other computer apparatus may be operated by another business operator or the like different from the user.

In addition, the information processing apparatus 1 executes a process of transmitting the sending information for sending the item or item to be sent to the owner identified in step S6 to the other computer apparatus operated by the other business operator or the like, whereby the item or item to be sent can be sent from the other business operator or the like to the owner by home delivery or mail. The sending information includes contact information such as the name, the address (indication of the residential address), and the telephone number of the owner, and the address (lot number and the indication of the residential address) of the identified piece of real estate. Contents of the item or item to be sent can be appropriately changed according to the predetermined attribute of the piece of real estate and the purpose thereof. For example, in the case where the predetermined attribute refers to the idle land or the vacant house, a message or a proposal sentence for sale, rental, or utilization of the piece of real estate can be transmitted to the owner of the piece of real estate.

The information processing apparatus 1 can print a medium such as paper on which the name and the address of the owner are displayed by executing the process of controlling the sending information (the name and the address of the owner) for sending the item or item to be sent to the owner identified in step S6 to be printed on the medium. By printing the name and the address of the owner on a medium such as paper and attaching the same to the item or item to be sent, the item or item to be sent can be sent to the owner. Here, as the medium to be used, it is possible to use a medium in a sticker form that can be utilized by applying an adhesive to a back surface of a printing surface of release paper and peeling off the release paper. The contents of the item or item to be sent can be appropriately changed according to the predetermined attribute of the piece of real estate and the purpose thereof.

The information processing apparatus 1 can also execute a process of storing, in an external storage medium (for example, an optical disk, a flash memory, or a hard disk), the sending information (the name and the contact information of the owner, the address (lot number) of the identified piece of real estate) for sending the item or item to be sent to the owner identified in step S6. By delivering the external storage medium storing the sending information to another business operator or the like different from the user, it is possible to send the item or item to be sent from the other business operator to the owner by home delivery or mail. The contents of the item or item to be sent can be appropriately changed according to the predetermined attribute of the piece of real estate and the purpose thereof.

By executing steps S1 to S7, the identification process ends. In the identification process, the piece of real estate having the predetermined attribute identified from one captured image, and the owner of the piece of real estate and the contact information thereof may be one or more.

Note that, after the processes of steps S1 to S3 are executed, the processes of steps S4 to S7 may be executed in response to an operation input to the information processing apparatus 1, or on the region for which selection has been accepted by the information processing apparatus 1. Alternatively, after the processes of steps S1 to S4 are executed, the processes of steps S5 to S7 may be executed in response to an operation input to the information processing apparatus 1, or on the region for which selection has been accepted by the information processing apparatus 1.

The address (indication of the residential address and/or the lot number) of the piece of real estate having the predetermined attribute, the owner of the piece of real estate, and the contact information of the owner identified by executing the identification process of steps S1 to S7 may be stored in the storage unit 13 of the information processing apparatus 1.

As described below, utilizing the system according to the embodiment of the present invention, the user can identify the owner of the piece of real estate having the predetermined attribute and the contact information thereof, and make various proposals to the owner. For example, utilizing the system, the user can identify the vacant house or the idle land from the captured image, and propose the sale of the piece of real estate or the land rental to the owner of the piece of real estate using the above communication method. **In** addition, the user can identify the vacant house or the idle land from the captured image, and propose the utilization of the piece of real estate to the owner of the piece of real estate using the above communication method. Examples of a method of utilizing the piece of real estate include construction of an apartment or a mansion, construction of a store or a warehouse, and installation of a monthly parking lot or a coin-operated parking lot.

**In** addition, utilizing the system, the user can identify old buildings of old ages from the captured image, and propose repair, renovation, or reconstruction of the buildings to the owners of the old buildings. Further, utilizing the system, the user can identify a rental property such as an apartment or a mansion (excluding a sale in lots) from the captured image, and propose management service, cleaning service, installation of a signboard, installation of a vending machine, installation of an antenna, and the like for the rental property to the owner of the piece of real estate.

Utilizing the system, the user can identify classes of crops cultivated in a field based on the captured image and information on vegetation of the area corresponding to the captured image, and propose what kind of crop is better to grow to the owner of the piece of real estate. In addition, utilizing the system, the user can identify a building infrequently utilized or a building in a vacant state using a normal captured image and a thermal infrared image of the ground captured from the sky, and propose sale or rental to an owner of the land or the building. Further, it is possible to identify in which area people gather based on the captured image and people flow data, to identify a land or a building where a store can be opened in the area where people gather, and to consult with an owner of the land or the building about rental, construction, or sale.

Utilizing the system, the user can identify, from the captured image, a building having a large roof or a large land, and propose solar power generator installation to the owner of the identified building or land. In addition, in a case where a road is newly constructed, the system can be utilized to grasp a state of a land accommodated by a local government or an administrative agency. In this case, it is possible to identify the owner of the vacant house and the idle land from the captured image and negotiate with the owner.

In the embodiment described above, it has been described that the user manipulates the information processing apparatus 1 to execute the identification process. However, for example, the user may manipulate a user terminal to execute the identification process of steps S1 to S7 in a server apparatus to which the user terminal can be communicatively connected. In this case, the server apparatus functions as the information processing apparatus 1 in the embodiment described above. The server apparatus transmits and receives information to and from the user terminal as necessary. The address of the piece of real estate having the predetermined attribute, the owner of the piece of real estate, and the contact information of the owner obtained as results of executing the identification process are transmitted from the server apparatus to the user terminal and displayed on a display screen of the user terminal. Note that the number of user terminals is not particularly limited only if being one or more.

In the embodiment described above, it has been mainly described that the region corresponding to the piece of real estate having the predetermined attribute is identified from the captured image of the ground captured from the sky, and the address of the piece of real estate corresponding to the identified region is identified based on the position of the identified region on the captured image. However, for example, in the system according to the embodiment of the present invention, for one or a plurality of points or one or a plurality of regions on the captured image or a map image, the address of the piece of real estate corresponding to the point or the region can be identified, and the owner of the piece of real estate corresponding to the identified address can be identified.

Here, the map image is not necessarily a captured image of the ground captured from the sky, and may be an image on which a map is displayed. The map image may be a captured image on which a map is displayed (referred to as a map image corresponding to the captured image). A range of the map image to be displayed can be changed, enlarged, or reduced, or a display mode (for example, the captured image or a map illustration) can be changed by the operation input of the user. First, the user manipulates the input unit 14 of the information processing apparatus 1 to select one point or region on the captured image or the map image, and identifies the address of the piece of real estate corresponding to the selected point or region. The address of the piece of real estate corresponding to the selected point or region is identified by executing a process similar to that in steps S3 and S4 or step S4 of the embodiment described above.

Specifically, the information processing apparatus 1 identifies the address of the piece of real estate corresponding to the selected region based on the selected point or region on the captured image or the map image. The information processing apparatus 1 may identify the latitude and longitude corresponding to at least one position of the selected region based on the position of the selected point or region on the captured image or the map image, and identify the address of the piece of real estate corresponding to the identified latitude and longitude.

In the storage unit 13 of the information processing apparatus 1, the map data of the same area as the area where the captured image has been captured is registered in advance. In addition, as the captured image used during the selection, used is the image data with which the latitude and longitude of each point or each region on the captured image can be identified. In the map data, the address (lot number or indication of the residential address) of each region or each point is stored in association with the latitude and longitude of each region or each point on the map. In addition, on the map image, the latitude and longitude of each region or each point and the address (lot number or the indication of the residential address) are stored in association with each region or each point on the map.

Therefore, if the point or the region is selected on the captured image, the information processing apparatus 1 can identify the latitude and longitude corresponding to at least one position of the point or the region based on the point or the region on the captured image. The information processing apparatus 1 can refer to the map data in which the address of each region or each point is stored in association with the latitude and longitude of each region or each point on the map, and identify the address (lot number or the indication of the residential address) corresponding to the latitude and longitude corresponding to at least one position of the identified region. Note that the information processing apparatus 1 may identify the address of the piece of real estate corresponding to the point or the region based on the point or the region on the map image without identifying the latitude and longitude. Alternatively, the information processing apparatus 1 may identify the latitude and longitude corresponding to the point or the region and the address of the piece of real estate based on the point or the region on the map image. The information processing apparatus 1 may identify the address of the piece of real estate corresponding to the identified region using the orthogonal coordinate system on the plane.

If the address of the piece of real estate corresponding to the selected point or region is identified, it is possible to identify the name and the contact information of the owner of the piece of real estate corresponding to the identified address based on the correspondence relationship between the address and the owner of the piece of real estate corresponding to the address. The name and the contact information of the owner of the piece of real estate corresponding to the selected point or region is identified by executing a process similar to that in step S6 of the embodiment described above.

Specifically, the information processing apparatus 1 can identify the owner of the piece of real estate and the contact information thereof using the data stored in association with the address and the owner of the piece of real estate corresponding to the address. For example, in the storage unit 13 of the information processing apparatus 1, the owner master table in which the owner of the piece of real estate corresponding to the address (lot number) and the contact information of the owner are stored is registered in association with the address (lot number). The information processing apparatus 1 can identify the owner corresponding to the identified address or the identified lot number and the contact information thereof by referring to the owner master table. In addition, the information processing apparatus 1 may identify the owner corresponding to the identified lot number and the contact information thereof in cooperation with the system including the other computer apparatus.

Alternatively, the user may manipulate the input unit 14 of the information processing apparatus 1 to select a plurality of points or a plurality of regions on the captured image or the map image, and identify addresses of pieces of real estate corresponding to the plurality of selected points or the plurality of selected regions. The addresses of the pieces of real estate corresponding to the plurality of selected points or the plurality of selected regions is identified by executing a similar process as in steps S3 and S4 or step S4 of the embodiment described above on respective points or regions. Then, based on the correspondence relationship between the addresses and the owners of the pieces of real estate corresponding to the addresses, it is possible to identify names and contact information of owners of the pieces of real estate corresponding to the plurality of identified addresses, respectively. The names and the contact information of the owners of the piece of real estate corresponding to the selected points or regions are identified by executing a process similar to that in step S6 of the embodiment described above.

In a case where the user manipulates the input unit 14 of the information processing apparatus 1 to select the plurality of points or the plurality of regions on the captured image or the map image, the information processing apparatus 1 displays a sign at at least one position of one of the selected points or regions on the captured image or the map image together with the captured image or the map image. A predetermined symbol may be displayed on or near the sign. The predetermined symbol may be a number, a letter, or an illustration. For the predetermined symbol, different symbols are given according to the points or the regions. For example, according to an order of the points or the regions selected on the map image, predetermined symbols corresponding to respective points or regions may be represented by consecutive numbers such as "1" and "2".

In addition, in a case where the user manipulates the input unit 14 of the information processing apparatus 1 to select the plurality of points or the plurality of regions on the captured image or the map image, the information processing apparatus 1 may display, on one display screen, a list of a plurality of identified addresses, or may display, on one display screen, a list of owners of pieces of real estate corresponding to the plurality of identified addresses and the contact information thereof. In addition, the information processing apparatus 1 displays the selected points or regions, the addresses, and the owners of the pieces of real estate corresponding to the addresses and the contact information thereof in association with each other. The "display in association" means that, for example, the predetermined symbols corresponding to the selected points or regions are displayed on the map image, and the addresses corresponding to the selected points or regions, and the owners of the pieces of real estate corresponding to the addresses and the contact information thereof are displayed in the same row together with the same symbols as the predetermined symbols.

Note that, after selecting the plurality of points or the plurality of regions on the captured image or the map image, the user may further receive input of selection information related to identifying the addresses of the pieces of real estate or selection information related to identifying no address of the real estate. The information processing apparatus 1 may identify the address of the piece of real estate corresponding to the region in which the input of the selection information related to identifying the address of the piece of real estate has been received, or may identify the address of the piece of real estate corresponding to a region other than the region in which the input of the selection information related to identifying no address of the piece of real estate has been received.

The identification process can be performed through the following processes utilizing the system according to the embodiment of the present invention. Here, described will be a case where the server apparatus functions as the above information processing apparatus 1 in a system including the user terminal and the server apparatus. First, the user activates dedicated application software in the user terminal, and inputs a user ID for identifying the user and a password set for each user ID. The server apparatus receives the user ID and the password input to the user terminal, authenticates the user, and permits the user to log in to the system.

When logging in to the system, the user can input an area to be subjected to the identification process to the user terminal (corresponding to step S1). For example, the user inputs up to a town name such as "Kasumigaseki, Chiyoda-ku, Tokyo" as the area to the user terminal.

Note that the user may input a specific place, a specific building name, or specific coordinates (for example, a latitude and longitude or an address) to the user terminal instead of inputting a geographic name. In this case, the user inputs, to the user terminal, a distance (radius) for identifying a range of the area to be subjected to the identification process from the input place. The user may input the distance by a numerical value or may input the distance by time. In a case where the distance is input by the time, the distance is calculated from the input time based on a correspondence relationship between the distance and the time to travel the distance. In a case where the distance is input by the numerical value to the user terminal, information related to the correspondence relationship between the distance and the time to travel the distance may be displayed. For example, "walking for 1 minute = about 80 m, driving for 1 minute = about 400 m" may be displayed on the user terminal.

In addition, the user can input an attribute of the piece of real estate to be identified in the identification process. For example, options for attributes of a piece of real estate such as a vacant house, an old house, a parking lot, an old store, a field, or an apartment are prepared as options for inputting the attributes of the piece of real estate (the type of the piece of real estate), and the user can select one of these options by manipulating the user terminal.

If the user inputs the area to be subjected to the identification process and an attribute of a piece of real estate desired to be identified to the user terminal, the processes of steps S2 to S4 are executed in the server apparatus, and addresses where there is the piece of real estate corresponding to the input attribute are identified. In the server apparatus, the number of the identified piece of real estate or the number of the addresses is counted. The counted number of the pieces of real estate or the counted number of the addresses is transmitted to the user terminal and displayed on the display screen. The user can manipulate the user terminal to request display of a list of the addresses of the identified pieces of real estate on the display screen. In this case, if the display of the list of the addresses of the identified pieces of real estate is executed, the user may be charged.

If the user selects a button for requesting the display of the list of the addresses of the identified pieces of real estate on the display screen of the user terminal, the list of the addresses of the pieces of real estate is displayed on the display screen of the user terminal. In the displayed list of the pieces of real estate on the display screen, the addresses are displayed in association with the attributes of the pieces of real estate (for example, the idle land). In addition, a check box is provided for each piece of real estate, and the piece of real estate with the check box checked can be registered in the list. Even in a case where an application is once terminated and activated again, it is possible to display and confirm the address and the like of the piece of real estate registered in the list on the user terminal.

Alternatively, if the user inputs the area to be subjected to the identification process and an attribute of a piece of real estate desired to be identified to the user terminal, the processes of steps S2 to S4 are executed in the server apparatus, and the latitude and longitude and/or the address where there is the piece of real estate corresponding to the input attribute are identified. The identified information is transmitted to the user terminal and displayed on the display screen. In addition, in the server apparatus, the number of the identified piece of real estate or the number of the addresses is counted. The counted number of the pieces of real estate or the counted number of the addresses is transmitted to the user terminal and displayed on the display screen. Alternatively, if the user inputs the area to be subjected to the identification process and an attribute of a piece of real estate desired to be identified to the user terminal, the processes of steps S2 and S3 are executed in the server apparatus, and the latitude and longitude where there is the piece of real estate corresponding to the input attribute may be identified. The identified information is transmitted to the user terminal and displayed on the display screen.

The user can manipulate the user terminal to make a request for executing the process of step S6 or S7. For example, in a case of executing the process of step S6 or S7, it is also possible to charge the user. If the user selects a request button for executing the process of step S6 displayed on the display screen of the user terminal, the processes of steps S5 and S6 or steps S4 to S6 may be executed. In this case, if the processes of steps S5 and S6 or steps S4 to S6 are executed, the user may be charged. Alternatively, if the user selects a request button for executing the process of step S7 displayed on the display screen of the user terminal, the processes of steps S5 to S7 or steps S4 to S7 may be executed. In this case, if the processes of steps S5 to S7 or steps S4 to S7 are executed, the user may be charged.

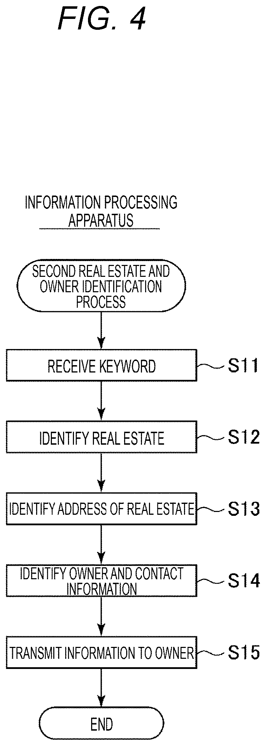

Next, a second real estate and owner identification process by the system according to an embodiment of the present invention will be described. Fig. 4 is a diagram illustrating a flowchart of the second real estate and owner identification process according to an embodiment of the present invention. The user manipulates the input unit 14 of the information processing apparatus 1 to start dedicated application software for executing the second real estate and owner identification process (hereinafter, the second real estate and owner identification process is referred to as a "second identification process"). The user manipulates the input unit 14 of the information processing apparatus 1 to start the second identification process for identifying an owner of a piece of real estate satisfying the predetermined conditions.

If the user manipulates the input unit 14 of the information processing apparatus 1 to input a keyword (also referred to as attribute information) of a piece of real estate, a store, or a facility to be subjected to the second identification process, the information processing apparatus 1 receives the input keyword (step S11). Here, the keyword (attribute information) of the piece of real estate or the like may be any of an area, a type of the piece of real estate or the like such as a restaurant or a lumber shop, an operation status such as closing, a name of the piece of real estate or the like. In step S11, the user inputs the area and other information thereof. The input of the keyword of the piece of real estate includes a case of inputting a string such as a geographic name by a keyboard, a software keyboard, or the like, and a case of selecting an option for each area provided in advance. In step S11, if the user inputs the string, the information processing apparatus 1 receives the input string.

Next, the information processing apparatus 1 identifies the piece of real estate, the store, or the facility satisfying the predetermined conditions based on the received keyword (step S12). In step S12, the piece of real estate, the store, or the facility satisfying the predetermined conditions, or a name of the piece of real estate, the store, or the facility may be identified based on the received keyword.

Next, the information processing apparatus 1 identifies an address (indication of a residential address or a lot number) corresponding to the piece of real estate, the store, or the facility identified in step S12 based on a preset correspondence relationship between the address and the piece of real estate, the store, or the facility corresponding to the address (step S13). In step S13, the address corresponding to the name of the piece of real estate, the store, or the facility identified in step S12 may be identified based on the preset correspondence relationship between the address and the name of the piece of real estate, the store, or the facility corresponding to the address.

The data related to the correspondence relationship between the address and the attribute information of the piece of real estate, the store, or the facility corresponding to the address, which is used in steps S12 and S13, may be stored in advance in the storage unit 13 of the information processing apparatus 1. In addition, map data provided on the Internet may be utilized as data related to the correspondence relationship between the address and the attribute information of the piece of real estate, the store, or the facility corresponding to the address. The map data stores the correspondence relationship between the address and the attribute information of the piece of real estate, the store, or the facility corresponding to the address. In a case where the map data provided on the Internet is utilized, the information processing apparatus 1 acquires, from another computer apparatus, data related to the correspondence relationship between the address in the map data and the attribute information of the piece of real estate, the store, or the facility corresponding to the address.

For example, in a case where a string "villa" is received in step S11, in steps S12 and S13, it is possible to identify a name of a building that is old and an address of the building among Japanese style apartments such as "** villa". **In** addition, in a case where a string "restaurant" is received in step S11, a name of a western restaurant such as "** restaurant" and an address of the western restaurant can be identified in steps S12 and S13.

For example, in a case where strings of "restaurant" and "closed" are received in step S11, a building that is "restaurant" and "closed" and an address of the building can be identified in steps S12 and S13. In a case of receiving the string "restaurant", the information processing apparatus 1 may identify not only a store with the string "restaurant" but also a store having attribute information registered as a restaurant. In addition, in a case of receiving the string "closed", the information processing apparatus 1 may identify a store with similar attribute information registered as "closed", "shutdown", "scheduled to be closed", or the like.

**In** a case where the string received in step S11 is an area, the information processing apparatus 1 can identify a piece of real estate, a store, or a facility having attribute information that completely matches or partially matches the string. **In** addition, in a case where the string received in step S11 is a type or an operation state of a piece of real estate or the like, or a name of the piece of real estate or the like, the information processing apparatus 1 can identify a piece of real estate, a store, or a facility having attribute information that completely matches, partially matches, or is similar to the string. **In** this way, inputting the string used for the piece of real estate or the store having the predetermined attribute information in step S11 makes it possible to identify the piece of real estate having the predetermined attribute information.

Next, the owner of the piece of real estate corresponding to the identified address is identified based on the correspondence relationship between the address and the owner of the piece of real estate corresponding to the address (step S14). **In** step S14, the owner of the piece of real estate corresponding to the identified address and the contact information of the owner may be identified based on the correspondence relationship between the address, and the owner of the piece of real estate corresponding to the address and the contact information of the owner. **In** a case where the lot number is identified in step S13, the owner of the piece of real estate corresponding to the identified lot number and the contact information thereof are identified based on the correspondence relationship between the lot number and the owner of the piece of real estate corresponding to the lot number. Note that the owner of the piece of real estate also includes the owner of the store, the facility, or a land on which the store or the facility is located.

A method of identifying the owner of the piece of real estate corresponding to the identified address and the contact information of the owner is not particularly limited. However, it is preferable that the owner of the piece of real estate and the contact information thereof be identified using the data stored in association with the address and the owner of the piece of real estate corresponding to the address. For example, in the storage unit 13 of the information processing apparatus 1, the owner master table in which the owner of the piece of real estate corresponding to the address (lot number) and the contact information of the owner are stored is registered in association with the address (lot number). The owner corresponding to the address identified in step S13 and the contact information thereof are identified by referring to the owner master table. In addition, the information processing apparatus 1 may identify the owner corresponding to the lot number identified in step S13 and the contact information thereof in cooperation with the system including the other computer apparatus.

The "owner" identified in step S14 refers to the name of the owner. In addition, the contact information of the owner identified in step S14 is not particularly limited, and the examples thereof can include a fixed telephone number, a telephone number of a mobile phone, an e-mail address, a facsimile number, an address (indication of a residential address), a zip code, and the like. By outputting such as displaying the name and the contact information of the identified owner on the display unit 15 of the information processing apparatus 1, the user can contact the owner of the piece of real estate by telephone, e-mail, facsimile, mail, or the like.

Next, the information processing apparatus 1 transmits predetermined information to the identified owner, that is, the owner of the piece of real estate having the predetermined attribute information using the contact information of the owner identified in step S14 (step S15). The predetermined information to be transmitted in step S15 is not particularly limited. The predetermined information can be transmitted to the input unit 14 of the information processing apparatus 1 and stored in the storage unit 13 by the user. The predetermined information stored in the storage unit 13 is read out during execution of step S15.

The predetermined information to be transmitted to the owner of the piece of real estate in step S15 can be appropriately changed depending on a type of the predetermined attribute information or the purpose of the user. A method of transmitting the predetermined information in step S15 is also not particularly limited. The method of transmitting the predetermined information may be selected by the user manipulating the input unit 14 of the information processing apparatus 1.

In addition, instead of the process of transmitting the predetermined information to the owner of the piece of real estate in step S15 or in addition to the process of transmitting the predetermined information to the owner of the piece of real estate, it is also possible to execute a process of transmitting transmission information for transmitting the predetermined information or sending information for sending an item or item to be sent to the owner of the piece of real estate identified in step S14 to another computer apparatus, the process of controlling the sending information to be printed on the medium, and/or the process of storing the sending information in the storage medium. Which of these processes is executed after step S14 is executed can be appropriately designed. By manipulating the input unit 14 of the information processing apparatus 1, the user can also select which of these processes to be executed.

By executing the process of transmitting, to another computer apparatus, the transmission information for transmitting the predetermined information to the owner identified in step S14, the predetermined information can be transmitted from the other computer apparatus to the owner by e-mail or facsimile. In addition, by executing the process of transmitting the sending information for sending the item or item to be sent to the owner identified in step S14 to the other computer apparatus operated by the other business operator or the like, the item or item to be sent can be sent from the other business operator or the like to the owner by home delivery or mail. By executing the process of controlling the sending information (the name and the address of the owner) for sending the item or item to be sent to the owner identified in step S14 to be printed on the medium, it is also possible to further execute a process of storing, in an external storage medium, the sending information (the name and the contact information of the owner, and the address (lot number) of the identified piece of real estate) for transmitting the item or item to be sent to the owner identified in step S14.

By executing steps S11 to S15, the second identification process ends. The address (indication of the residential address and the lot number) of the piece of real estate identified by executing the second identification process in steps S11 to S15, the owner of the piece of real estate, and the contact information of the owner may be stored in the storage unit 13 of the information processing apparatus 1.

In the embodiment described above, it has been described that the user manipulates the information processing apparatus 1 to execute the second identification process. However, for example, the user may manipulate a user terminal to execute the second identification process of steps S11 to S15 in the server apparatus to which the user terminal can be communicatively connected. In this case, the server apparatus functions as the information processing apparatus 1 in the embodiment described above. The server apparatus transmits and receives information to and from the user terminal as necessary. The address of the piece of real estate having the predetermined attribute information, the owner of the piece of real estate, and the contact information of the owner obtained as results of executing the second identification process are transmitted from the server apparatus to the user terminal and displayed on the display screen of the user terminal. Note that the number of user terminals is not particularly limited only if being one or more.

The system according to the embodiments of the present invention can also utilize open data published by the national government, local governments, private companies, and the like. Although the open data that can be utilized in the system according to the embodiments of the present invention is not particularly limited, it is possible to utilize the number of crimes per capita, the number of traffic accidents per capita, the number of hospitals per capita, the number of community centers per capita, the number of libraries per capita, the number of nursing care welfare facilities for the elderly per capita, the number of restaurants per capita, the number of retail stores per capita, the number of large supermarkets per capita, the number of department stores per capita, the number of child welfare facilities per capita, the density of green spaces, the temperature in the summer or winter, the density of population, the tax revenue of the area, the medical expense subsidy, the number of child-raising generations, the surface temperature, the optical thickness of aerosol (viral infection risk), the air pollution, the imperviousness index, the climate (temperature, humidity, wind direction, wind speed, precipitation, snow cover, sunshine time, solar radiation, dew point, visibility, atmospheric pressure), the air cleanliness, the ratio of in- and out-migration population, the road density, the traffic volume, the sewage treatment population coverage rate, the water charges, the noise, the earthquake (active fault), the water treatment (hazard map), the radiation volume, the cafe density, the distance to a railroad station, the distance to a bus stop, the average residential land price, the financial power index, the resident tax, the average income, the average residential floor area, the urban planning area (use district), the posted price, the standard land price, the roadside land price, the hazard information (sediment disaster, tsunami, flood), and the like. The data is stored in association with, for example, the area, the address, or the latitude and longitude.

Although a method of utilizing the open data is not particularly limited, in step S7 and/or step S15 or the like, the information to be transmitted to the owner of the piece of real estate or the contents of the item or item to be sent can also be changed according to the open data. For example, even in a case where a proposal for real estate utilization is made to the owner of the vacant house with the information to be transmitted to the owner of the piece of real estate or the item or item to be sent, it is possible to propose utilization of the vacant house as a dwelling house such as a mansion or an apartment in a case where the address of the vacant house is in an area with a high population density (an area with a population density equal to or higher than a threshold value), and it is possible to propose utilization of the vacant house as a facility other than the dwelling house in a case where the address of the vacant house is in an area with a low population density.

According to the embodiments of the present invention, the region corresponding to the piece of real estate having the predetermined attribute is identified from the captured image of the ground captured from the sky, and the address of the piece of real estate corresponding to the identified region is identified, whereby the address of the piece of real estate having the predetermined attribute can be identified from the captured image. **In** addition, according to the embodiments of the present invention, it is possible to identify the latitude and longitude corresponding to at least one position of the identified region, and to identify the address of the piece of real estate corresponding to the identified latitude and longitude.

According to the embodiments of the present invention, it is possible to identify the owner of the piece of real estate having the predetermined attribute based on the correspondence relationship between the address and the owner of the piece of real estate corresponding to the address.

According to the embodiments of the present invention, it is possible to identify the owner of the piece of real estate having the predetermined attribute and the contact information of the owner based on the correspondence relationship between the address, and the owner of the piece of real estate corresponding to the address and the contact information of the owner. According to the embodiments of the present invention, it is possible to identify the owner of the piece of real estate corresponding to the identified lot number based on the correspondence relationship between the lot number and the owner of the piece of real estate corresponding to the lot number.

According to the embodiments of the present invention, it is possible to identify the owner of the piece of real estate having the predetermined attribute, to transmit, to another computer apparatus, the transmission information for transmitting the predetermined information or the sending information for sending the item or item to be sent to the owner, to control the sending information to be printed on the medium, and/ or to store the sending information to the storage medium.

According to the embodiments of the present invention, it is possible to respectively identify the addresses of the pieces of real estate corresponding to the plurality of points or the plurality of regions based on the positions of the plurality of points or the plurality of regions on the map image, and to identify the owners of the pieces of real estate corresponding to the plurality of identified addresses based on the correspondence relationship between the addresses and the owners of the pieces of real estate corresponding to the addresses.

According to the embodiments of the present invention, it is possible to identify the address corresponding to the name of the piece of real estate, the store, or the facility satisfying the predetermined conditions based on the correspondence relationship between the address and the attribute information of the piece of real estate, the store, or the facility corresponding to the address, and to identify the owner of the piece of real estate corresponding to the identified address.

According to the embodiments of the present invention, it is possible to receive the input of a string, and to identify the address corresponding to the name of the piece of real estate, the store, or the facility including the received string.

- 1: Information processing apparatus,
- 11: Control unit,
- 12: RAM,
- 13: Storage unit,
- 14: Input unit,
- 15: Display unit,
- 16: Communication interface,
- 21: Map data,
- 22: Captured image,
- 23: Region

## Claims

1. A system including at least one computer apparatus, the system comprising:
a region identifier that identifies, from a captured image of ground captured from the sky, a region corresponding to a piece of real estate having a predetermined attribute; and
an address identifier that identifies an address of the piece of real estate corresponding to the identified region.

2. The system according to claim 1, wherein the address identifier identifies a latitude and longitude corresponding to at least one position of the identified region, and identifies an address of the piece of real estate corresponding to the identified latitude and longitude.

3. The system according to claim 1 or 2, comprising:
an owner identifier that identifies an owner of the piece of real estate corresponding to the address identified by the address identifier based on a correspondence relationship between the address and the owner of the piece of real estate corresponding to the address.

4. The system according to claim 3, wherein the owner identifier identifies the owner of the piece of real estate corresponding to the address identified by the address identifier and contact information of the owner based on a correspondence relationship between the address, and the owner of the piece of real estate corresponding to the address and the contact information of the owner.

5. The system according to claim 3, wherein the address identified by the address identifier is a lot number, and
the owner identifier identifies the owner of the piece of real estate corresponding to the identified lot number based on a correspondence relationship between the lot number and the owner of the piece of real estate corresponding to the lot number.

6. The system according to claim 3, comprising:
a first information transmitter that transmits predetermined information to the owner identified by the owner identifier;
a second information transmitter that transmits, to another computer apparatus, transmission information for transmitting the predetermined information or sending information for sending an item or item to be sent to the identified owner;
a printer that controls the sending information to be printed on a medium; and/or
a storage that stores the sending information in a storage medium.

7. The system according to claim 1 or 2, wherein the region identifier identifies the region corresponding to the piece of real estate having the predetermined attribute using a prediction model machine-learned using, as input data, image data of at least a partial region of the captured image of the ground captured from the sky and using, as output data, information related to the attribute of the piece of real estate corresponding to the region.

8. The system according to claim 1 or 2, wherein the predetermined attribute refers to a vacant house, an idle land, a parking lot, an agricultural land, or a predetermined building.

9. A program causing a computer apparatus to function as:
a region identifier that identifies, from a captured image of ground captured from the sky, a region corresponding to a piece of real estate having a predetermined attribute; and
an address identifier that identifies an address of the piece of real estate corresponding to the identified region.

10. A method executed in a system including at least one computer apparatus, the method comprising:
a region identification step of identifying, from a captured image of ground captured from the sky, a region corresponding to a piece of real estate having a predetermined attribute; and
an address identification step of identifying an address of the piece of real estate corresponding to the identified region.

11. A system including at least one computer apparatus, the system comprising:
an address identifier that respectively identifies addresses of pieces of real estate corresponding to a plurality of points or a plurality of regions based on positions of the plurality of points or the plurality of regions on a captured image or a map image corresponding to the captured image; and
an owner identifier that respectively identifies owners of the pieces of real estate corresponding to the plurality of addresses identified by the address identifier based on a correspondence relationship between the addresses and the owners of the pieces of real estate corresponding to the addresses.

12. The system according to claim 11, comprising:
a list displayer that displays, on one display screen, a list of the plurality of addresses identified by the address identifier, and/or displays, on one display screen, a list of the owners of the pieces of real estate corresponding to the plurality of addresses identified by the owner identifier.

13. A program causing a computer apparatus to function as:
an address identifier that respectively identifies addresses of pieces of real estate corresponding to a plurality of points or a plurality of regions based on positions of the plurality of points or the plurality of regions on a captured image or a map image corresponding to the captured image; and
an owner identifier that identifies owners of the pieces of real estate corresponding to the plurality of addresses identified by the address identifier based on a correspondence relationship between the addresses and the owners of the pieces of real estate corresponding to the addresses.

14. A method executed in a system including at least one computer apparatus, the method comprising:
an address identification step of respectively identifying addresses of pieces of real estate corresponding to a plurality of points or a plurality of regions based on positions of the plurality of points or the plurality of regions on a captured image or a map image corresponding to the captured image; and
an owner identification step of identifying owners of the pieces of real estate corresponding to the plurality of addresses identified by the address identification step based on a correspondence relationship between the addresses and the owners of the pieces of real estate corresponding to the addresses.

15. A system including at least one computer apparatus, the system comprising:
an address identifier that identifies an address corresponding to a piece of real estate, a store, or a facility satisfying a predetermined condition based on a correspondence relationship between the address and attribute information of the piece of real estate, the store, or the facility corresponding to the address; and
an owner identifier that identifies an owner of the piece of real estate, the store, or the facility corresponding to the identified address.

16. The system according to claim 15, comprising:
a string input receptor that receives an input of a string, wherein
the address identifier identifies an address corresponding to a name of a piece of real estate, a store, or a facility including the received string.

17. The system according to claim 15 or 16, comprising:
a first information transmitter that transmits predetermined information to the owner identified by the owner identifier;
a second information transmitter that transmits, to another computer apparatus, transmission information for transmitting the predetermined information or sending information for sending an item or item to be sent to the identified owner;
a printer that controls the sending information to be printed on a medium; and/or
a storage that stores the sending information in a storage medium.

18. A program causing a computer apparatus to function as:
an address identifier that identifies an address corresponding to a piece of real estate, a store, or a facility satisfying a predetermined condition based on a correspondence relationship between the address and attribute information of the piece of real estate, the store, or the facility corresponding to the address; and
an owner identifier that identifies an owner of the piece of real estate, the store, or the facility corresponding to the identified address.

19. A method executed in a system including at least one computer apparatus, the method comprising:
an address identification step of identifying an address corresponding to a piece of real estate, a store, or a facility satisfying a predetermined condition based on a correspondence relationship between the address and attribute information of the piece of real estate, the store, or the facility corresponding to the address; and
an owner identification step of identifying an owner of the piece of real estate, the store, or the facility corresponding to the identified address.
